# EUROPEAN PATENT SPECIFICATION

(11) **EP 4 422 151 B1**
(45) Date of publication and mention of the grant of the patent: **05.08.2026**
(21) Application number: 22906642.8
(22) Date of filing: 15.12.2022
(51) Int. Cl.: H04L 65/1066, H04L 65/1063, H04L 65/1016, H04L 65/1046

(54) **METHOD AND DEVICE FOR EXECUTING CALL-RELATED SERVICES**
VERFAHREN UND VORRICHTUNG ZUR AUSFÜHRUNG VON ANRUFBEZOGENEN DIENSTEN
PROCÉDÉ ET DISPOSITIF POUR EXÉCUTER DES SERVICES LIÉS À UN APPEL

(30) Priority: 17.12.2021 CN 202111561320
(43) Date of publication of application: 28.08.2024
(73) Proprietor: Huawei Technologies Co., Ltd., Shenzhen, Guangdong 518129 (CN)
(72) Inventor: LIU, Liangliang, Shenzhen, Guangdong 518129 (CN)
(74) Representative: Gill Jennings & Every LLP
(86) International application number: PCT/CN2022/139252
(87) International publication number: WO 2023/109897

(56) References cited:
- EP-A1- 1 257 129
- EP-A1- 2 068 529
- CN-A- 101 222 483
- CN-A- 102 469 070
- CN-A- 102 651 732
- US-A1- 2010 185 772
- US-A1- 2011 029 558

## Description

### CROSS-REFERENCE TO RELATED APPLICATIONS

### TECHNICAL FIELD

This application relates to the field of communication technologies, and in particular, to a method for executing a call-related service and an apparatus.

### BACKGROUND

A universal network architecture that provides a multimedia service over an internet protocol (Internet Protocol, IP) network, that is, a multimedia subsystem (IP Multimedia Subsystem, IMS), is a brand-new multimedia service form that can be provided by a communication operator, and can meet novel and diversified multimedia service requirements of terminal customers.

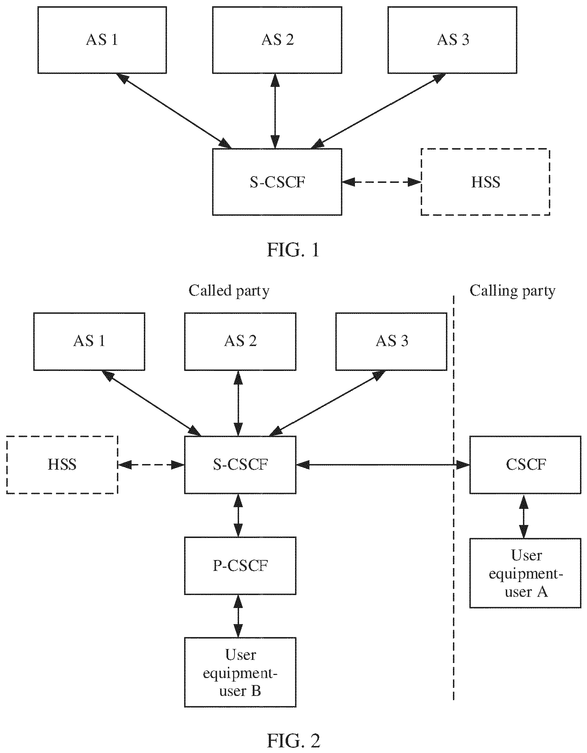

An application server (Application Server, AS) is a device at an application layer in the IMS network. As shown in FIG. 1, the IMS network usually includes a plurality of ASs, configured to provide services such as a basic service, a supplementary service, a multimedia conference, and converged communication. For example, the IMS network includes a multimedia telephony (Multimedia telephony, MMTel) AS, and a customized ring back tone AS. The AS can interact with a call session control function (Call Session Control Function, CSCF) network element through a session initialization protocol (Session initialization Protocol, SIP) to trigger and execute various network services.

Currently, a plurality of AS services of a user are serially triggered one by one based on priorities of the AS services. Different AS services may conflict and cannot be executed simultaneously. Therefore, an interaction process of sensing, understanding, and responding needs to be completed between every two ASs to resolve the conflict between the ASs. Therefore, when a large quantity of new ASs emerge with change and development of user requirements, both complexity and workload of processing a conflict between the ASs are large, and efficiency of serially resolving the conflict is low.

EP 1257129 A1 discloses a method and system for managing a plurality of services triggered by a message of a session protocol such as SIP controlling a communications session. US 2011/029558 A1 discloses a service generation system in a communications network and a method for responding to a service request.

### SUMMARY

This application provides a method for executing a call-related service and an apparatus, to resolve a problem in a conventional technology that complexity and workload of processing a conflict between ASs are large, and efficiency of serially resolving the conflict is low.

To achieve the foregoing objective, this application uses the following technical solutions. The invention is set out in the appended set of claims.

According to a first aspect, a method for executing a call-related service is provided, applied to a call service enabler entity, where the method includes: sending a call event to a plurality of application servers in parallel; separately receiving call control instructions from the plurality of application servers, to obtain a plurality of call control instructions, where each call control instruction instructs the call service enabler entity to perform a call-related operation; determining that the plurality of call control instructions include a mutually exclusive instruction set, where the mutually exclusive instruction set includes at least two call control instructions that are mutually exclusive; and selecting one call control instruction in the mutually exclusive instruction set to execute, or sequentially executing the call control instructions in the mutually exclusive instruction set.

Based on the foregoing method, the call service enabler entity sends the same call event to the plurality of application servers in parallel with no need to wait for a receiving response from the application server and then separately send the call event; combines the received call control instructions delivered by the plurality of application servers for processing; and selects one mutually exclusive instruction to execute or sequentially executes mutually exclusive instructions included in the plurality of call control instructions, to implement triggering of AS services in parallel, thereby improving efficiency of resolving a conflict between the AS services and improving system performance of a communication network.

In an implementation, the mutually exclusive instruction set includes a first instruction and a second instruction, and the first instruction and the second instruction instruct to perform a same operation at same time based on different operation parameters.

Based on the foregoing method, the plurality of call control instructions delivered by the plurality of application servers include mutually exclusive instructions of a same instruction type, so that the call service enabler entity can quickly identify and process the call control instructions that are mutually exclusive by using a preset mutually exclusive instruction detection mechanism, thereby improving efficiency of resolving the conflict between the AS services.

In an implementation, if the first instruction and the second instruction include the same operation and both include a first parameter, and a value of the first parameter in the first instruction is different from a value of the first parameter in the second instruction, the first instruction and the second instruction form the mutually exclusive instruction set, where the first instruction and the second instruction come from different application servers.

Based on the foregoing method, the call service enabler entity may detect whether values of a same parameter carried in call control instructions of a same type from different application servers are the same, so that the call service enabler entity can quickly identify and process the call control instructions that are mutually exclusive, thereby improving efficiency of resolving the conflict between the AS services.

In an implementation, the mutually exclusive instruction set includes a third instruction and a fourth instruction, the third instruction and the fourth instruction instruct to perform, at same time, different operations that cannot be simultaneously performed, and the third instruction and the fourth instruction come from different application servers.

Based on the foregoing method, the plurality of call control instructions delivered by the plurality of application servers include mutually exclusive instructions of different instruction types, so that the call service enabler entity can quickly identify and process the call control instructions that are mutually exclusive by using a preset mutually exclusive instruction detection mechanism, thereby improving efficiency of resolving the conflict between the AS services.

The selecting one call control instruction in the mutually exclusive instruction set to execute specifically includes: executing a call control instruction with a highest priority in the mutually exclusive instruction set.

Based on the foregoing method, the call service enabler entity may execute only the call control instruction with the highest priority in the mutually exclusive instruction set, to quickly resolve the conflict between the parallel AS services based on priorities of the AS services, thereby improving efficiency of resolving the conflict between the AS services and improving system performance of the communication network.

In an implementation, the method further includes: sending an instruction processing success response to an application server corresponding to the call control instruction with the highest priority; and sending a reason for an instruction processing failure to an application server corresponding to a call control instruction other than the call control instruction with the highest priority in the mutually exclusive instruction set, where the reason for an instruction processing failure is mutual exclusion of instructions.

Based on the foregoing method, when selecting one instruction in the mutually exclusive instruction set to execute, the call service enabler entity may feed back, to the another application server, that the reason for an instruction processing failure of the call service enabler entity is the mutual exclusion of instructions, so that the application server does not need to wait for execution of the instruction and continues to perform a subsequent operation, to quickly resolve the conflict between the parallel AS services, thereby improving flexibility of the conflict between the parallel AS services and improving efficiency of resolving the conflict between the AS services.

In an implementation, the sequentially executing the call control instructions in the mutually exclusive instruction set specifically includes: sequentially executing the call control instructions in the mutually exclusive instruction set in descending order of priorities.

Based on the foregoing method, the call service enabler entity may further execute each instruction or sequentially execute some instructions in the mutually exclusive instruction set based on the priorities of the AS services, thereby improving flexibility of the conflict between the parallel AS services and improving efficiency of resolving the conflict between the AS services.

In an implementation, before the sequentially executing the call control instructions in the mutually exclusive instruction set in descending order of priorities, the method further includes: sorting the call control instructions in the mutually exclusive instruction set in descending order of priorities.

In an implementation, the sequentially executing the call control instructions in the mutually exclusive instruction set in descending order of priorities specifically includes: sending first indication information to an application server corresponding to a call control instruction with a non-highest priority in the mutually exclusive instruction set, where the first indication information indicates that the call control instruction delivered by the application server is delayed being executed; and executing a call control instruction with a highest priority in the mutually exclusive instruction set, and sending an instruction processing success response to a server corresponding to the call control instruction with the highest priority.

Based on the foregoing method, when subsequently executing the instructions in the mutually exclusive instruction set based on the priorities of the AS services, the call service enabler entity may send an instruction delay execution indication to the application server, to notify the application server of waiting for execution of the delivered instruction, thereby improving flexibility of the conflict between the parallel AS services and improving efficiency of resolving the conflict between the AS services.

In an implementation, the first indication information further includes a delay duration indication.

Based on the foregoing method, the delay execution indication delivered by the call service enabler entity to the application server may further carry duration information of the delay indication, and the duration information indicates execution time that is of the application server and that is based on a corresponding call control instruction, thereby improving flexibility of the conflict between the parallel AS services and improving efficiency of resolving the conflict between the AS services.

In an implementation, before the sending a call event to a plurality of ASs in parallel, the method further includes: receiving user identities and call event subscription information corresponding to users from the plurality of application servers.

Based on the foregoing method, the application server may report user information in which the application server is interested and subscription information about a call event subscribed by a user to the call service enabler entity in advance, so that the call service enabler entity may deliver the call event and perform subsequent steps based on the user information and the call event subscribed by the user, thereby resolving the conflict between the parallel AS services.

In an implementation, the call service enabler entity is deployed in a call session control function CSCF network element or a unified control function UCF network element.

Based on the foregoing method, the call service enabler entity may be independently deployed, or may be deployed inside the CSCF network element, or may be deployed in the UCF network element in a new audio/video architecture, or the like. This is not specifically limited in this application.

In an implementation, before the sending a call event to a plurality of application servers in parallel, the method further includes: generating the call event based on a call session message of a terminal device.

According to an example second aspect, a communication apparatus is provided, where the apparatus includes: a sending module, configured to send a call event to a plurality of application servers in parallel; a receiving module, configured to separately receive call control instructions from the plurality of application servers, to obtain a plurality of call control instructions, where each call control instruction instructs the apparatus to perform a call-related operation; and a processing module, configured to determine that the plurality of call control instructions includes a mutually exclusive instruction set, where the mutually exclusive instruction set includes at least two call control instructions that are mutually exclusive; and the processing module is further configured to: select one call control instruction in the mutually exclusive instruction set to execute, or sequentially execute the call control instructions in the mutually exclusive instruction set.

In an implementation, the mutually exclusive instruction set includes a first instruction and a second instruction, and the first instruction and the second instruction instruct to perform a same operation at same time based on different operation parameters.

In an implementation, if the first instruction and the second instruction include the same operation and both include a first parameter, and a value of the first parameter in the first instruction is different from a value of the first parameter in the second instruction, the first instruction and the second instruction form the mutually exclusive instruction set, where the first instruction and the second instruction come from different application servers.

In an implementation, the mutually exclusive instruction set includes a third instruction and a fourth instruction, the third instruction and the fourth instruction instruct to perform, at same time, different operations that cannot be simultaneously performed, and the third instruction and the fourth instruction come from different application servers.

In an implementation, the processing module is specifically configured to execute a call control instruction with a highest priority in the mutually exclusive instruction set.

In an implementation, the sending module is further configured to: send an instruction processing success response to an application server corresponding to the call control instruction with the highest priority; and send a reason for an instruction processing failure to an application server corresponding to a call control instruction other than the call control instruction with the highest priority in the mutually exclusive instruction set, where the reason for an instruction processing failure is mutual exclusion of instructions.

In an implementation, the processing module is specifically configured to sequentially execute the call control instructions in the mutually exclusive instruction set in descending order of priorities.

In an implementation, the processing module is specifically configured to sort the call control instructions in the mutually exclusive instruction set in descending order of priorities.

In an implementation, the sending module is further configured to send first indication information to an application server corresponding to a call control instruction with a non-highest priority in the mutually exclusive instruction set, where the first indication information indicates that the call control instruction delivered by the application server is delayed being executed; the processing module is specifically configured to execute a call control instruction with a highest priority in the mutually exclusive instruction set; and the sending module is further configured to send an instruction processing success response to a server corresponding to the call control instruction with the highest priority.

In an implementation, the first indication information further includes a delay duration indication.

In an implementation, the receiving module is further configured to receive user identities and call event subscription information corresponding to users from the plurality of application servers.

In an implementation, the apparatus is deployed in a call session control function CSCF network element or a unified control function UCF network element.

In an implementation, the processing module is further configured to generate the call event based on a call session message of a terminal device.

According to a third aspect, a communication apparatus is provided. The communication apparatus includes a processor. The processor is configured to: be coupled to a memory, and after reading instructions in the memory, perform the method in the first aspect based on the instructions. The communication apparatus may be the call service enabler entity in the first aspect, or an apparatus including the call service enabler entity.

With reference to the third aspect, in a possible implementation, the communication apparatus further includes a memory. The memory is configured to store necessary program instructions and data.

According to an example fourth aspect, a communication apparatus is provided. The communication apparatus includes a processor and an interface circuit. The interface circuit is configured to receive a computer program or instructions and transmit the computer program or the instructions to a processor. The processor is configured to execute the computer program or the instructions, to enable the communication apparatus to perform the method in the first aspect.

According to a fifth aspect, an embodiment of this application provides a computer-readable storage medium. The computer-readable storage medium stores instructions, and when the instructions are run on a computer, the computer may be enabled to perform the method in the first aspect.

According to a sixth aspect, an embodiment of this application provides a computer program product including instructions. When the computer program product runs on a computer, the computer may be enabled to perform the method in the first aspect.

For technical effects brought by any possible implementation in the second to the sixth aspects, refer to technical effects brought by different possible implementations in the first aspect. Details are not described herein again.

### BRIEF DESCRIPTION OF DRAWINGS

FIG. 1 is an architectural diagram of a communication system according to an embodiment of this application;
FIG. 2 is another architectural diagram of a communication system according to an embodiment of this application;
FIG. 3 is a schematic flowchart of triggering an AS service according to an embodiment of this application;
FIG. 4 is a schematic diagram of a structure of a communication apparatus according to an embodiment of this application;
FIG. 5 is a schematic flowchart of a method for executing a call-related service according to an embodiment of this application;
FIG. 6 is a schematic flowchart of collaborative processing of a plurality of AS services according to an embodiment of this application;
FIG. 7 is a schematic diagram of mutual exclusion of instructions according to an embodiment of this application;
FIG. 8 is another schematic flowchart of collaborative processing of a plurality of AS services according to an embodiment of this application;
FIG. 9 is another schematic flowchart of collaborative processing of a plurality of AS services according to an embodiment of this application;
FIG. 10 is another architectural diagram of a communication system according to an embodiment of this application; and
FIG. 11 is a schematic diagram of a structure of a communication apparatus according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

First, an implementation environment and an application scenario of embodiments of this application are briefly described.

Embodiments of this application are applied to an IMS network. The IMS network is an IP multimedia subsystem, and is a network that is born based on an IP and that provides various multimedia services for a user.

FIG. 1 is an architectural diagram of a system of the IMS network. As shown in FIG. 1, the IMS network includes a serving call session control function (Serving Call Session Control Function, S-CSCF) network element and a plurality of application servers ASs, such as an AS 1, an AS 2, and an AS 3. The S-CSCF network element performs route management on a calling party and a called party and performs AS triggering based on user subscription data, to implement functions of various AS services.

In the IMS network, the CSCF network element is a core network element and is responsible for signaling control in a multimedia call session process, for example, managing user authentication of the IMS network, controlling a SIP session in cooperation with another network entity, and performing service negotiation and resource allocation. Each AS can interact with the CSCF network element through a SIP protocol to trigger and execute various network services.

According to different functions, the CSCF network element may be classified into: a proxy CSCF (Proxy CSCF, P-CSCF) network element, an interrogating CSCF (Interrogating CSCF, I-CSCF) network element, a serving CSCF (Serving CSCF S-CSCF) network element, an emergency CSCF (Emergency CSCF, E-CSCF) network element, and the like. The foregoing different CSCF network elements are essentially SIP servers, and are used to process SIP signaling during communication.

A call session service may be a voice call service or a video call service that is performed by user equipment (user equipment, UE) that serves as the calling party or the called party by connecting with another UE through a communication network. For example, the UE is the calling party. The call session service may be a voice call service or a video call service performed by the UE by dialing a mobile phone number, a fixed-line phone number, or a customer service center number. Alternatively, the call session service may be a voice call service or a video call service performed by the UE by calling another UE by using a real time communication (real time communication, RTC) application. For example, the UE is the called party. The call session service may be a voice call service or a video call service performed by the UE by receiving a call from a mobile phone, a fixed-line phone, or a customer service center. Alternatively, the call session service may be a voice call service or a video call service performed by the UE by receiving a call from another UE by using an RTC application.

The application server AS is a network element that provides various specific multimedia services for the user in the IMS network. The IMS network usually includes a plurality of ASs, and the plurality of ASs are configured to provide various different services. For example, the IMS network may include a multimedia telephony (Multimedia telephony, MMTel) AS for providing a multimedia telephony basic service and a multimedia telephony supplementary service, a multimedia ring back tone (Multimedia Ring Back Tone, MRBT) AS for providing a customized ring back tone service for the user, and other third-party ASs.

In addition, as shown in FIG. 1, the IMS network may further include a home subscriber server (Home Subscriber Server, HSS). The HSS includes a user configuration profile, and the user configuration profile may be used for authentication and authorization of the user. In addition, the HSS supports a primary user database of an IMS network entity configured to process or invocate call sessions.

Currently, the IMS network generally triggers the AS according to an initial filter criteria (Initial Filter Criteria, iFC). The iFC defines conditions and objectives for triggering the AS service based on different priorities of the AS services. The S-CSCF network element may use the iFC as a basis for determining whether to trigger the AS and which AS is triggered.

Further, the iFC may be stored in the HSS as a part of the user subscription data. When the S-CSCF network element processes an initial user service request (such as registration) subsequently, the S-CSCF network element downloads the user subscription data from the HSS to obtain the iFC, and triggers one or more corresponding ASs based on the priorities in the iFC, so that the AS provides a corresponding service for the user.

The AS services are serially triggered one by one based on the priorities of the AS services. If there are a plurality of AS services, the S-CSCF network element sequentially triggers corresponding ASs in descending order of preset priorities of the AS services when receiving an initial session request.

When a user subscribes to a plurality of AS services, the AS services may conflict. In other words, when a user needs to trigger two or more ASs simultaneously, the AS services cannot be executed simultaneously or in sequence due to mutual impact between the AS services. As a result, user experience may not meet an expectation. This is called an AS service conflict.

FIG. 2 is another schematic diagram of an architecture of a communication system according to an embodiment of this application. For example, a customized ring back tone service and a call waiting (Call Waiting, CW) service are used as examples. In a scenario in which a user A calls a user B, the user B is a called party, and the user A is a calling party. The user B has subscribed to both the customized ring back tone service and the CW service. When the user A calls the user B when the user B is engaged in a call, the user A may hear a CW announcement, and the CW announcement indicates the user A that the user B is busy and needs to be waited. However, due to impact of the customized ring back tone service of the user B, if a network plays the customized ring back tone subscribed by the user B to the user A, the user A mistakenly considers that the user B is in an idle state. Therefore, in an IMS network, an AS service conflict occurs between a customized ring back tone AS and an MMTel AS that provides the CW service. The network can resolve the AS service conflict through signaling exchange.

Currently, when there is a conflict between two or more AS services simultaneously triggered by a user, an interaction process of sensing, understanding, and responding needs to be completed between every two ASs, to resolve the conflict between the ASs. Sensing means that two ASs that conflict with each other may enable the peer party to sense triggering of the AS service in an exchange manner of message forwarding by using an S-CSCF network element. For example, in the foregoing example, the MMTel AS may send a response message to the S-CSCF network element, and then the S-CSCF network element transparently transmits the message to the customized ring back tone AS, so that the customized ring back tone AS may sense, based on the message, that the user A side currently triggers the CW service. Understanding means that the receiver AS needs to be able to understand content of the message. Responding means that the receiver AS needs to adjust its own AS service to some extent based on the understood content of the message. In the foregoing example, the customized ring back tone AS may understand, based on the received message, that the user A side currently triggers the CW service, and therefore suppress a customized ring back tone playing message on the user A side, thereby resolving the conflict problem between the two AS services.

In another example, a customized ring back tone service and a call forwarding no reply (Call Forwarding No Rely, CFNR) service are used as examples. A user B has subscribed to the CFNR service, that is, a call is forwarded to a user C if the user B has no reply. In addition, the user B has further subscribed to the customized ring back tone service. When a user A calls the user B, an S-CSCF network element preferentially triggers the customized ring back tone AS and then triggers an MMTel AS that provides the CFNR service according to a preconfigured priority sequence.

For example, the S-CSCF network element first sends a session creation invitation request (Invite(SDPa=audio)) Invite message to the customized ring back tone AS according to the priority sequence. After receiving the session creation invitation request, the customized ring back tone AS sends a session invitation answer message to an S-CSCF network element of the calling party. The session creation invitation request may carry a session description protocol (session description protocol, SDP) parameter SDPa=audio, to indicate to perform a voice call service. After receiving the response message (session invitation answer message) of the customized ring back tone AS, the S-CSCF network element sends the Invite message to the MMTel AS. After receiving the Invite message, the MMTel AS returns a response message to the S-CSCF network element, to indicate that the MMTel AS receives a corresponding request message.

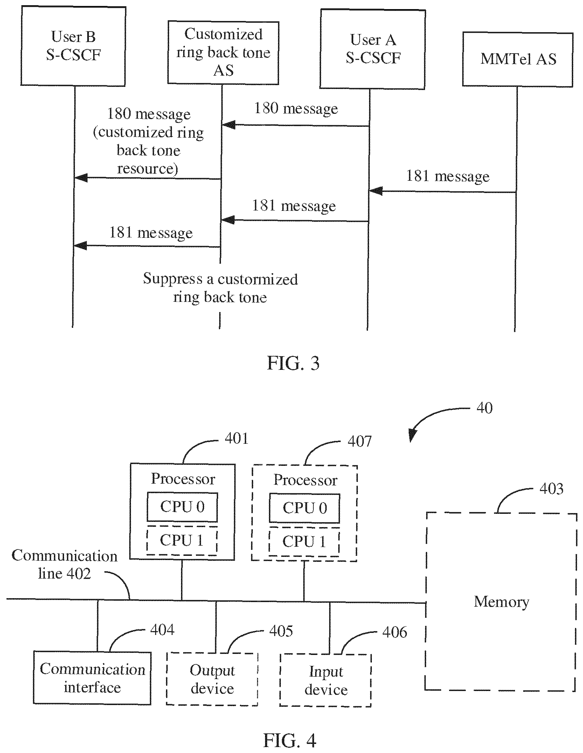

Refer to FIG. 3. Further, when a user A calls a user B, if the user B is idle, an S-CSCF network element on the user B side sends a ring (180 Ring) message (180 message for short) to a customized ring back tone AS, to apply to the customized ring back tone AS for a customized ring back tone resource. The customized ring back tone AS sends the 180 message to an S-CSCF network element on the user A side, and adds the customized ring back tone media resource to the 180 message, so that the user A side can play a corresponding customized ring back tone based on the customized ring back tone media resource. It should be noted that for detailed signaling interaction in the foregoing process, refer to an existing conventional technology. This is merely briefly described in this application.

In this case, if customized ring back tone playing times out on the user A side, the CFNR service of the user B needs to be triggered. The MMTel AS initiates a call to a user C, and in addition to prevent the user A side from still continuing playing the customized ring back tone, the MMTel AS sends a call forwarding notification (that is, a 181 message) to the S-CSCF network element of the user B. The S-CSCF network element then transparently transmits the 181 message to the customized ring back tone AS. Therefore, the customized ring back tone AS may sense, based on the message, that the CFNR service is currently triggered, and send the 181 message to the user A to suppress customized ring back tone playing on the user A side. It should be noted that for detailed signaling interaction in the foregoing process, refer to an existing conventional technology. This is merely briefly described in this application.

It can be seen from the foregoing example that, in an existing process of processing the conflict between the plurality of ASs, the AS services are serially triggered one by one based on the priorities of the AS services, and the ASs need to sense the conflict and make the corresponding response to avoid the conflict. With continuous change and development of user requirements, thousands of new ASs, small applications, and a large quantity of traditional supplementary services may exist in the future. As a result, both complexity and workload of processing the conflict between the ASs are high, and efficiency of processing the AS service is low.

Based on the foregoing problem, this application provides a method for executing a call-related service and an apparatus, which may be applied to the communication system shown in FIG. 1, FIG. 2, and the like. It should be understood that the communication system shown in FIG. 1 or FIG. 2 is merely used as an example, and is not used to limit a technical solution of this application. A person skilled in the art should understand that, in a specific implementation process, the communication system shown in FIG. 1 or FIG. 2 may further include another device, and a quantity of network elements shown in FIG. 1 may also be determined based on a specific requirement. This is not limited in this application.

Optionally, each device in FIG. 1 or FIG. 2 in embodiments of this application may be a general-purpose device or a dedicated device. This is not specifically limited in embodiments of this application.

Optionally, a related function of each device in FIG. 1 or FIG. 2 in embodiments of this application may be implemented by one device, or may be jointly implemented by a plurality of devices, or may be implemented by one or more functional modules in one device. This is not specifically limited in embodiments of this application. It may be understood that the foregoing function may be an element in a hardware device, may be a software function running on dedicated hardware, a combination of hardware and software, or a virtualization function instantiated on a platform (for example, a cloud platform).

During specific implementation, each device in FIG. 1 or FIG. 2 may be in a composition structure shown in FIG. 4 or include components shown in FIG. 4. FIG. 4 is a schematic diagram of a hardware structure of a device 40 applicable to embodiments of this application. The device 40 includes at least one processor 401 and at least one communication interface 404, and is configured to implement the method provided in embodiments of this application. The device 40 may further include a communication line 402 and a memory 403.

The processor 401 may be a general-purpose central processing unit (central processing unit, CPU), a microprocessor, an application-specific integrated circuit (application-specific integrated circuit, ASIC), or one or more integrated circuits configured to control program execution in the solutions of this application.

The communication line 402 may include a path, for example, a bus, for transmitting information between the foregoing components.

The communication interface 404 is configured to communicate with another device or a communication network. The communication interface 404 may be an apparatus of any transceiver type, for example, may be an Ethernet interface, a radio access network (radio access network, RAN) interface, a wireless local area network (wireless local area network, WLAN) interface, a transceiver, a pin, a bus, or a transceiver circuit.

The memory 403 may be a read-only memory (read-only memory, ROM) or another type of static storage device that can store static information and an instruction, or a random access memory (random access memory, RAM) or another type of dynamic storage device that can store information and an instruction. The memory 403 may alternatively be an electrically erasable programmable read-only memory (electrically erasable programmable read-only memory, EEPROM), a compact disc read-only memory (compact disc read-only memory, CD-ROM) or another compact disc storage, optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that is accessible by a computer, but is not limited thereto. The memory may exist independently, and is coupled to the processor 401 through the communication line 402. Alternatively, the memory 403 may be integrated with the processor 401. The memory provided in embodiments of this application may be usually non-volatile.

The memory 403 is configured to store computer-executable instructions for performing the solutions provided in embodiments of this application, and the processor 401 controls the execution of the computer-executable instructions. The processor 401 is configured to execute the computer-executable instructions stored in the memory 403, to implement the methods provided in the following embodiments of this application. Alternatively, optionally, in embodiments of this application, the processor 401 may perform processing-related functions in a method provided in the following embodiments of this application, and the communication interface 404 is responsible for communication with another device or a communication network. This is not specifically limited in embodiments of this application.

Optionally, the computer-executable instructions in embodiments of this application may also be referred to as application program code. This is not specifically limited in embodiments of this application.

The coupling in embodiments of this application may be an indirect coupling or a communication connection between apparatuses, units, or modules in an electrical form, a mechanical form, or another form, and is used for information exchange between the apparatuses, the units, or the modules.

In an embodiment, the processor 401 may include one or more CPUs, for example, a CPU 0 and a CPU 1 in FIG. 4.

In an embodiment, the device 40 may include a plurality of processors, for example, the processor 401 and a processor 407 in FIG. 4. Each of the processors may be a single-core processor (single-CPU) or a multi-core processor (multi-CPU). Herein, the processor may be one or more devices, circuits, and/or processing cores configured to process data (for example, computer program instructions).

In an embodiment, the device 40 may further include an output device 405 and/or an input device 406. The output device 405 is coupled to the processor 401, and may display information in a plurality of manners. For example, the output device 405 may be a liquid crystal display (liquid crystal display, LCD), a light-emitting diode (light-emitting diode, LED) display device, a cathode ray tube (cathode ray tube, CRT) display device, or a projector (projector). The input device 406 is coupled to the processor 401, and may receive an input from a user in a plurality of manners. For example, the input device 406 may be a mouse, a keyboard, a touchscreen device, or a sensor device.

It should be understood that the composition structure shown in FIG. 4 does not constitute a limitation on the device. In addition to the components shown in FIG. 4, the device may include more or fewer components than those shown in the figure, or combine some components, or have different component arrangements.

With reference to the accompanying drawings, the following describes a method for executing a call-related service provided in an embodiment of this application. Each device in the following embodiments may have the components shown in FIG. 4. Details are not described again.

It should be noted that names of messages between network elements, names of parameters in the messages, or the like in the following embodiments of this application are merely examples, and there may be other names in a specific implementation. This is not specifically limited in embodiments of this application.

It should be noted that in embodiments of this application, "and/or" may be used to describe three relationships existing between associated objects. For example, A and/or B may represent three cases: only A exists, both A and B exist, and only B exists. A and B can be singular or plural. In addition, expressions similar to "at least one of A, B, and C" or "at least one of A, B, or C" generally indicate any one of the following: Only A exists, only B exists, only C exists, both A and B exist, both A and C exist, both B and C exist, and all of A, B, and C exist. The foregoing uses a total of three elements A, B, and C as an example to describe optional items of this item. When there are more elements in the expression, a meaning of the expression may be obtained according to the foregoing rules.

To facilitate description of the technical solutions in embodiments of this application, in embodiments of this application, terms such as "first" and "second" may be used to distinguish between technical features having same or similar functions. The terms such as "first" and "second" do not limit a quantity and an execution sequence, and the terms such as "first" and "second" do not indicate a definite difference. In embodiments of this application, a term such as "example" or "for example" indicates an example, an illustration, or a description. Any embodiment or design scheme described as an "example" or "for example" should not be explained as being more preferred or having more advantages than another embodiment or design scheme. Use of the term such as "example" or "for example" is intended to present a relative concept in a specific manner for ease of understanding.

It may be understood that a same step or a step or a technical feature having a same function in embodiments of this application may be mutually referenced in different embodiments.

This application provides a method for executing a call-related service, which may be applied to an S-CSCF network element, or applied to a call service enabler function (Call Service Enabler Function, CSEF) entity or referred to as a service enabler function (Service Enabler Function, SEF) entity. The CSEF/SEF entity may be independently deployed in a communication system, or may be deployed in an S-CSCF network element. This is not specifically limited in this application.

It should be noted that, in the following embodiments, the call service enabler entity CSEF entity is merely used as an example for description.

In this embodiment of this application, an AS service is triggered in a manner of reporting a call event in parallel and delivering a call control instruction. Specifically, when a call service occurs, the CSEF entity reports a call event to all ASs in parallel. After receiving the call event, all the ASs deliver call control instructions to the CSEF entity according to their own business logic. The CSEF entity collects the call control instructions delivered by all the ASs, then automatically identifies mutually exclusive instructions in the call control instructions, performs selection on the mutually exclusive instructions based on global priorities of the ASs, and preferentially executes a call control instruction with a higher priority, to process a conflict between the parallel AS services, thereby improving processing efficiency.

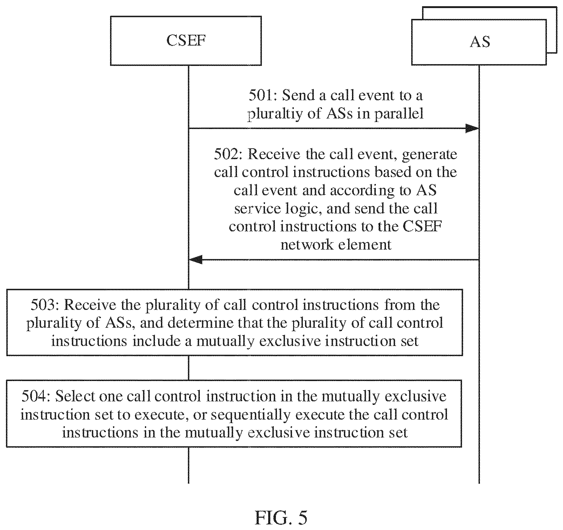

The following describes implementations of this application in detail with reference to the accompanying drawings. As shown in FIG. 5, the method includes the following steps.

501: A CSEF entity sends a call event to a plurality of ASs in parallel.

In other words, the CSEF entity sends the call event to the plurality ASs in parallel. The call event, that is, Call Event, is used to indicate a type of a call event that is being notified, for example, busy (Busy) and ring (Ring).

In a specific implementation, the CSEF entity provides a service-oriented application programming interface (Application Programming Interface, API) for the AS to invoke, to cooperate with the AS to implement various AS services.

Specifically, the CSEF entity includes a call event API, and the call event API is used to send various call events that occur in a user call session process to a corresponding AS.

In this implementation, the Call Event may be an enumerated value, and a call event that may be notified to an application program is listed.

It should be noted that "sending in parallel" herein means that a same call event is sent to all ASs together. In other words, after one call event is sent to a first AS, the call event may be directly sent to a second AS with no need to wait for receiving a response message from the first AS, and the call event may be directly sent to the second AS, a third AS, and the like. For example, after sending the call event to an AS 1, the CSEF entity does not need to wait for a response message from the AS 1, and sequentially sends the call event to an AS 2, an AS 3, and the like.

In an implementation, before the CSEF entity sends the call event to the plurality of ASs in parallel, the method may further include: When a user call service occurs, the CSEF entity may obtain the call event, or the CSEF entity generates the call event based on a call session message of a terminal device. In other words, the CSEF entity may generate corresponding call events based on various session messages in the user call service.

For example, the call event may include an initial call event, a notification ring event Ring, an off-hook event Answer, a release event Release, or the like.

For example, when the CSEF entity is independently deployed in an IMS network, the CSEF entity may obtain a call event from a CSCF network element, where the call event may be generated by the CSCF network element based on various session messages in the user call service. Alternatively, when the CSEF entity is deployed in the CSCF network element in the IMS network, the CSEF entity may generate corresponding call events based on various session messages in the user call service.

In an implementation, before the user call service occurs, the method may further include:

The CSEF entity receives user identities and call event subscription information corresponding to users from the plurality of ASs.

In other words, before the call service occurs, the AS needs to report a user identity corresponding to a user that subscribes to the AS service and call event subscription information corresponding to the user to the CSEF entity by using a subscription mechanism. For example, the user identity may be specifically an identity number of a subscriber identification module (Subscriber Identification Module, SIM). The call event subscription information may include subscription information of the initial call event, where the initial call event is mandatory reporting information, and other call events such as the ringing event or the off-hook event may be optional reporting information. Therefore, in a subsequent process of triggering the user call service, when a specific call event occurs, the CSEF entity may send the specific call event of a specific user to the AS based on the subscription information previously reported by the AS.

For example, the call event may further include a subscription type notification event Subscribe, an unsubscription event UnSubscribe, and the like.

502: The AS receives the call event, generates call control instructions based on the call event and according to AS business logic, and sends the call control instructions to the CSEF entity.

Each call control instruction instructs the CSEF entity to perform a call-related operation, specifically, an operation related to a call session service of the user. The operation related to the call session service is a related operation that needs to be performed by the CSEF entity for implementing the AS service on a specific call event generated based on the call session service. For example, in an implementation of a customized ring back tone AS service, a corresponding call control instruction may be a voice playing operation.

In other words, all ASs may process a same call event in parallel, that is, the ASs process the call event immediately after receiving the call event in a parallel state.

The AS obtains a call control instruction corresponding to the call event according to its own business logic. For example, if the call event received by the customized ring back tone AS is a ringing event, the customized ring back tone AS may generate, according to its own customized ring back tone playing business logic, a call control instruction PlayVoice that instructs to play voice to the user. Further, the call control instruction PlayVoice may further include a uniform resource locator (Uniform Resource Locator, URL) of a customized ring back tone media resource, and the uniform resource locator indicates the CSEF entity to determine a corresponding audio resource based on the URL.

For example, the call control instruction specifically includes a call new user instruction CallnewUser, a release user instruction ReleaseUser, a voice playing instruction Play Voice, an instruction for adding, modifying, or deleting an SDP SDPAction, an instruction for adding, modifying, or deleting a call parameter ParaAction, and the like.

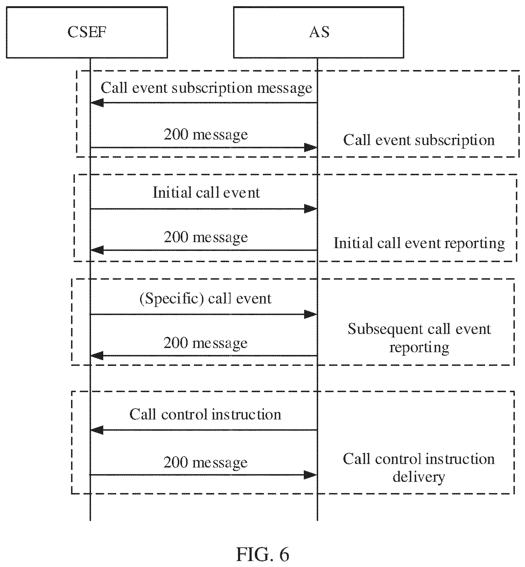

Refer to FIG. 6. FIG. 6 briefly shows an interaction procedure between the AS and the CSEF entity before the call session of the user is established and after the call session of the user is established in this application. When receiving the initial call event from the CSEF entity or the specific call event in the call session, the AS feeds back an event notification response to the CSEF entity. As shown in FIG. 6, the response (response) message may be, for example, a 200 message, and indicates that the AS successfully receives the call event from the CSEF entity. After receiving the call event subscription information delivered by the AS or the call control instruction in the call session, the entity also feeds back the event notification response, for example, the 200 message, to the AS.

503: The CSEF entity receives the plurality of call control instructions from the plurality of ASs, and determines that the plurality of call control instructions include a mutually exclusive instruction set.

First, the CSEF entity separately receives the call control instructions from the plurality of ASs, and integrates the call control instructions from all the ASs to obtain a first set including the plurality of call control instructions.

In an implementation, step 503 specifically includes: The CSEF entity receives all the call control instructions corresponding to the call event, that is, obtains the first set, and then continues to perform step 504, that is, processes and executes mutually exclusive instructions based on the call control instruction set. In other words, if the CSEF entity receives all the call control instructions corresponding to the ASs corresponding to the call event, the CSEF entity continues to perform the next step 504; otherwise, the CSEF entity continues to receive the call control instructions delivered by the ASs, and identifies the mutually exclusive instructions in the call control instructions.

In an implementation, ASs corresponding to a call event may be classified into two types: a blocking AS and a non-blocking AS. The blocking AS means that, after sending the call event to an AS, the CSEF entity needs to wait for a response or an indication message that is from the AS, for example, a call control instruction, and that corresponds to the call event. Therefore, the CSEF entity can continue to perform a subsequent operation according to the call control instruction delivered by the AS. For example, a blocking call event may include the ringing event of the customized ring back tone AS, and the CSEF entity needs to wait for the customized ring back tone AS to feed back a call control instruction based on the ringing event, to indicate to play voice for a calling party and indicate a to-be-played audio resource.

The non-blocking AS means that, after sending the call event to an AS, the CSEF entity does not need to wait for any response or instruction message from the AS, and the CSEF entity may continue to perform a subsequent operation according to an original process, for example, ringing notification of a CFNR service.

Based on this, in the foregoing step, that the CSEF entity obtains the first set specifically includes: If the CSEF entity receives call control instructions corresponding to all blocking ASs corresponding to the call event, the first set is obtained.

It may also be understood that the same call event is different event types for different ASs, and may be specifically classified into a blocking event and a non-blocking event. The blocking event indicates that the AS that receives the call event needs to deliver the call control instruction in a timely manner. The non-blocking event indicates that the AS that receives the call event does not need to deliver the call control instruction.

Then, the CSEF entity may determine, according to a preset mutually exclusive rule, whether the first set includes call control instructions that are mutually exclusive, and use the call control instructions that are mutually exclusive as elements in the mutually exclusive instruction set. The mutually exclusive instruction set includes at least two call control instructions that are mutually exclusive.

The mutually exclusive instructions indicate that two or more call control instructions received in parallel cannot be executed by the CSEF in parallel without sensing. For example, the foregoing customized ring back tone voice playing instruction delivered by the customized ring back tone AS and the CW announcement voice playing instruction of the MMTel AS cannot be executed in parallel.

It should be noted that, the mutually exclusive instruction indicates that a service conflict exists in AS services corresponding to at least two call control instructions, for example, the foregoing customized ring back tone service and the call forwarding no reply CFNR service.

The preset mutually exclusive rule includes two types: one is mutual exclusion of parameters included in an instruction, and the other is mutual exclusion of instructions.

1. Mutual exclusion of parameters included in the instruction: Different ASs deliver call control instructions with a same operation to a same user, where operation parameters in the call control instructions are unique, and the operation parameters in the call control instructions delivered by the different ASs are different.

In an implementation, the first set includes a first instruction and a second instruction, and the first instruction and the second instruction instruct to perform a same operation at same time based on different operation parameters. In other words, the first instruction and the second instruction are a same call control instruction, and a same operation is performed on a same user, but operation parameters corresponding to the two instructions are different. In this case, the first instruction and the second instruction may be used as a mutually exclusive instruction set. The same time may specifically mean that start time of executing the call control instruction is the same.

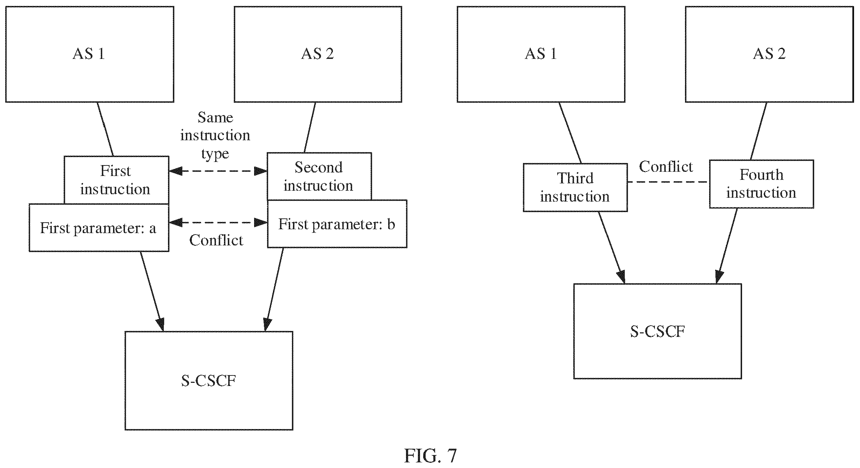

Further, as shown in FIG. 7, if the first instruction and the second instruction include a same operation and both include a first parameter, and a value of the first parameter in the first instruction is different from a value of the first parameter in the second instruction, the first instruction and the second instruction form a mutually exclusive instruction set. The first instruction and the second instruction are from different ASs.

For example, two ASs deliver voice playing instructions PlayVoice to the calling party, where a parameter included in the voice playing instruction, that is, a URL parameter of an audio resource needs to be unique. If URL parameters in the voice playing instructions PlayVoice delivered by the two ASs are inconsistent, the CSEF entity may consider that the two voice playing instructions PlayVoice are mutually exclusive instructions.

2. Mutual exclusion of instructions: Different ASs deliver at least two call control instructions with different operations to a same user, and the at least two call control instructions cannot be executed in parallel.

In an implementation, as shown in FIG. 7, the first set includes a third instruction and a fourth instruction, the third instruction and the fourth instruction instruct to perform, at same time, different operations that cannot be simultaneously performed, and the third instruction and the fourth instruction come from different application servers.

For example, two ASs separately deliver a release instruction and a voice playing instruction to a same user, where the release instruction instructs to release the user, and the voice playing instruction instructs to play voice to the user. Apparently, if the user is released, the user side cannot be instructed to play voice. It can be seen that the two call control instructions cannot be executed simultaneously, and the CSEF entity may consider that the two call control instructions are mutually exclusive instructions.

Based on the type of the call control instruction in the foregoing example, the following Table 1 shows a comparison table indicating whether the different call control instructions are mutually exclusive, where Y represents mutually exclusiveness, and N represents non-mutually exclusiveness.

**Table 1 Instruction mutual exclusion comparison table**

| | Call new user instruction CallnewUser | Release user instruction ReleaseUser | Voice playing instruction PlayVoice | SDPAction | ParaAction |
|---|---|---|---|---|---|
| Call new user instruction | \ | N | N | N | N |
| CallnewUser | | | | | |
| Release user instruction | N | \ | Y | Y | N |
| ReleaseUser | | | | | |
| Voice playing instruction | N | Y | \ | Y | N |
| Play Voice | | | | | |
| SDPAction | N | Y | Y | \ | N |
| ParaAction | N | N | N | N | \ |

In an implementation, based on the foregoing preset instruction mutually exclusive rule, a specific process of identifying, by the CSEF entity, the AS service conflict to determine the mutually exclusive instructions may include the following steps:
1. For a plurality of call control instructions received from a plurality of ASs, the CSEF entity combines every two of the call control instructions to perform mutually exclusive judgment.
2. The CSEF entity judges whether the current two call control instructions are the same; and if yes, determines to perform parameter-type mutual exclusion detection on the call control instructions, otherwise, performs message-type mutual exclusion detection.

A process of the parameter-type mutual exclusion detection includes: The CSEF entity judges all parameters included in the call control instructions one by one, and if any parameter is unique, and values of the parameters carried in the two call control instructions are different, it may be considered that the two call control instructions are mutually exclusive instructions. Otherwise, it may be considered that the two call control instructions are not mutually exclusive instructions.

A process of the message-type mutual exclusion detection includes: The CSEF entity queries a predefined instruction mutual exclusion comparison table, and determines, based on a query result, whether the two call control instructions are mutually exclusive instructions.

For example, the first set includes an instruction 1, an instruction 2, an instruction 3, an instruction 4, and an instruction 5. Every two instructions are combined and whether every two instructions are mutually exclusive is determined according to the foregoing rule. For example, if the instruction 1, the instruction 2, and the instruction 3 are mutually exclusive of an instruction type, the instruction 3 and the instruction 4 are mutually exclusive of a parameter type, and the instruction 5 is not mutually exclusive with any instruction, the CSEF entity may use the instruction 1, the instruction 2, and the instruction 3 as a mutually exclusive instruction set 1, and use the instruction 3 and the instruction 4 as a mutually exclusive instruction set 2.

In a specific implementation, the CSEF entity provides a service-oriented API for the AS to invoke, to cooperate with the AS to implement various AS services. Specifically, the CSEF entity includes a call control instruction API, and the call control instruction API is configured to receive and execute a to-be-executed call control instruction that is generated by each AS based on the call event.

504: The CSEF entity selects one call control instruction in the mutually exclusive instruction set to execute, or sequentially executes the call control instructions in the mutually exclusive instruction set.

The CSEF entity processes and executes the mutually exclusive instruction set in the following two specific execution manners: Manner 1: Selecting one call control instruction in the mutually exclusive instruction set, and discarding other call control instructions. Manner 2: Not discarding the instructions in the mutually exclusive instruction set are not discarded, but sequentially delaying executing the plurality of call control instructions in the mutually exclusive instruction set.

It should be noted that a specific manner selected by the CSEF entity to process the mutually exclusive instruction may be preconfigured by an operator based on an actual implementation requirement. This is not specifically limited in this application.

Manner 1: The CSEF entity selects one call control instruction in the mutually exclusive instruction set to execute.

In an implementation, the CSEF entity only executes a call control instruction with a highest priority in the mutually exclusive instruction set.

In other words, for one mutually exclusive instruction set, the CSEF entity reserves, based on priorities of AS services, a call control instruction delivered by an AS with a highest priority, and discards a call control instruction delivered by an AS with a lower priority. Then, the CSEF entity executes the call control instruction with the highest priority.

In an implementation, the CSEF entity may send an instruction processing success response to the AS corresponding to the call control instruction with the highest priority, where the instruction processing success response indicates that the call control instruction is successfully executed.

In an implementation, the CSEF entity may send an instruction processing failure response to an AS corresponding to a call control instruction other than the call control instruction with the highest priority in the mutually exclusive instruction set, where the instruction processing failure response indicates that the call control instruction fails to be executed, and a reason for the instruction execution failure is mutual exclusion of instructions.

In addition, for other call control instructions that do not have a mutually exclusive relationship in the first set, the CSEF entity may combine all reserved instructions, and sequentially execute the reserved instructions. For example, based on Manner 1, the CSEF entity reserves the instruction with the highest priority in the mutually exclusive instruction set, and discards other call control instructions in the mutually exclusive instruction set, to obtain a second set. Then, the CSEF entity sequentially executes call control instructions in the second set.

For example, with reference to the description in the foregoing example, the CSEF entity detects the mutually exclusive instruction set 1 and the mutually exclusive instruction set 2 according to the preset instruction mutually exclusive rule. The instruction 1 in the mutually exclusive instruction set 1 has a highest priority, and the instruction 4 in the mutually exclusive instruction set 2 has a highest priority. Therefore, the CSEF entity selects the instruction 1 for the mutually exclusive instruction set 1 to execute and selects the instruction 4 for the mutually exclusive instruction set 2 to execute according to a principle of selecting one for execution, and execute the three instructions in parallel with reference to the instruction 5 that is not mutually exclusive.

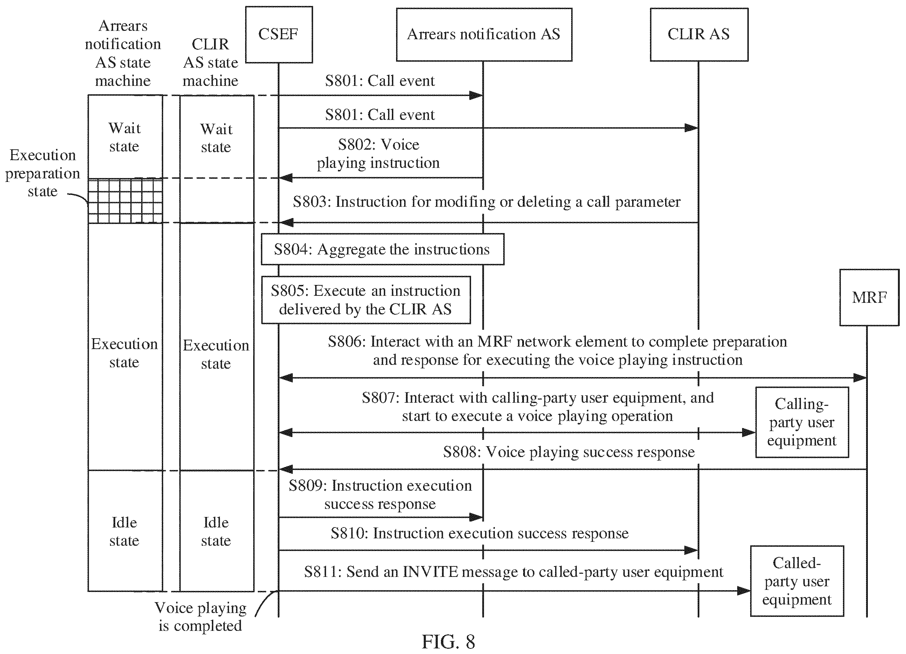

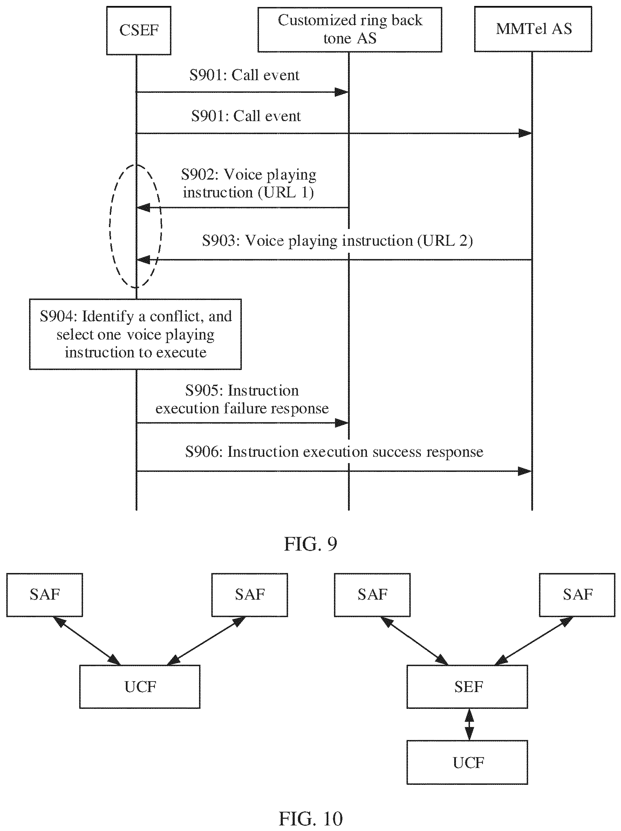

With reference to the accompanying drawings, the following describes a process of aggregating and executing the instructions by using the CSEF entity according to a specific embodiment. FIG. 8 is a schematic diagram of identifying non-mutually exclusive instructions and executing the instructions in parallel by a CSEF entity. FIG. 9 is a schematic diagram of identifying mutually exclusive instructions and selecting one instruction to execute by a CSEF entity.

With reference to FIG. 8, the following uses two AS services, namely, a calling line identification restriction (Calling Line Identification Restriction, CLIR) service and an arrears notification service, as an example to describe a processing procedure of collaboratively processing the AS services after the CSEF entity receives a call control instruction corresponding to an initial call event.

The CLIR service is a service applied to a calling party. Specifically, when the calling party has subscribed to the CLIR service, in a process of establishing a call, a called party cannot present user information such as a number and a name of the calling party.

The arrears notification service is also a service applied to a calling party. Specifically, when the calling party initiates a call, the calling party is announced that the calling party is in arrears. After the announcement is played, a called party is connected, that is, the called party rings.

As shown in FIG. 8, the processing process includes the following procedure.

S801: The CSEF entity sends a call event in parallel.

The CSEF entity sends the call event to an arrears notification AS and a CLIR AS in parallel, and the arrears notification AS and the CLIR AS separately receive the call event. A call control instruction generated by the arrears notification AS according to its own business logic and based on the call event is a voice playing instruction Play Voice.

S802: The arrears notification AS sends the voice playing instruction to the CSEF entity.

The voice playing instruction may be specifically the PlayVoice instruction. The voice playing instruction Play Voice may carry a URL of an audio resource. It can be seen from FIG. 8 that, at this time, an arrears notification AS state machine enters an execution preparation state from a waiting state, that is, waiting for the CSEF entity to execute the call control instruction delivered by the AS.

In parallel, the CLIR AS generates a call control instruction according to its own business logic and based on the call event, where the call control instruction is an instruction for modifying or deleting a call parameter ParaAction.

S803: The CLIR AS sends the instruction for modifying or deleting the call parameter to the CSEF entity.

The instruction for modifying or deleting the call parameter may be specifically the ParaAction instruction. The ParaAction instruction may carry a privacy parameter indicating modification of privacy permission. An identifier of the privacy parameter is user identity information, that is, privacy:ID, and indicates that the called party cannot present user identity information such as a number and a name of the calling party.

S804: The CSEF entity aggregates the instructions.

It can be seen from FIG. 8 that, after steps S802 and S803, in this case, after receiving the call control instructions delivered by all the ASs corresponding to the call event, the CSEF entity aggregates the instructions and identifies an instruction conflict. In this example, if the CSEF entity identifies that the ParaAction instruction delivered by the CLIR AS and the PlayVoice instruction delivered by the arrears notification AS are not conflicting instructions, the CSEF entity may execute the two instructions in parallel.

In other words, the CSEF entity executes the PlayVoice instruction delivered by the arrears notification AS and the ParaAction instruction delivered by the CLIR AS in parallel. In addition, both the arrears notification AS and the CLIR AS enter an execution state.

S805: The CSEF entity executes the instruction delivered by the CLIR AS.

Specifically, the CSEF entity executes the ParaAction instruction delivered by the CLIR AS, that is, in a process of establishing a call session, the CSEF entity sends an INVITE message to called-party user equipment. The INVITE message carries the privacy parameter, and the privacy parameter indicates the called party does not present information such as a number and a name of the calling party.

In addition, the CSEF entity executes the PlayVoice instruction delivered by the arrears notification AS, which includes step S806 to step S808.

S806: The CSEF entity interacts with an MRF network element to complete preparation and response for executing the voice playing instruction.

S807: The CSEF entity interacts with calling-party user equipment, and starts to execute a voice playing operation.

S808: The MRF network element sends a voice playing success response to the CSEF entity.

S809: The CSEF entity sends an instruction execution success response to the arrears notification AS.

S810: The CSEF entity sends an instruction execution success response to the CLIR AS.

Specifically, after the voice playing instruction starts to be executed successfully, the CSEF entity sends the instruction execution success response corresponding to the PlayVoice instruction to the arrears notification AS, and then sends the instruction execution success response corresponding to the ParaAction instruction to the CLIR AS.

S811: The CSEF entity sends the INVITE message to the called party.

Specifically, after the voice playing corresponding to the ParaAction instruction is completed, the CSEF entity sends the INVITE message to the called-party user equipment, where the INVITE message may carry a calling-party media.

The instruction execution response may specifically include a call control instruction execution success response and an execution completion response. The call control instruction execution success response indicates that the call control instruction is successfully executed, and the CSEF entity may send the call control instruction execution success response to the AS. Some call control instructions have time continuity, and the execution completion response indicates that the instruction is finally executed successfully. For example, if the voice playing instruction and the voice playing-related signaling are successfully sent and completely responded, it is considered that the call control instruction is successfully executed, and the CSEF entity may send the call control instruction execution success response to the AS. However, duration of the voice playing process is 15 seconds. When the voice playing is completed after 15 seconds, the CSEF entity may send an execution completion response to the AS.

In another example, with reference to FIG. 9, the following uses two AS services, namely, a user call waiting (Call Waiting, CW) service and a customized ring back tone service, as an example to describe a processing procedure of collaboratively processing an AS service conflict after the CSEF entity receives a call control instruction corresponding to an initial call event. The procedure includes the following steps.

S901: The CSEF entity sends a call event in parallel.

As shown in FIG. 9, the CSEF entity sends the call event to a customized ring back tone AS and an MMTel AS (that is, a CW service provider AS) in parallel, and the customized ring back tone AS and the MMTel AS separately receive the call event.

S902: The customized ring back tone AS sends the voice playing instruction to the CSEF entity.

A call control instruction generated by the customized ring back tone AS according to its own business logic and based on the call event is a voice playing instruction Play Voice, and the customized ring back tone AS sends the PlayVoice instruction to the CSEF entity. The voice playing instruction PlayVoice may carry a URL 1 of a customized ring back tone resource.

S903: The MMTel AS sends the voice playing instruction to the CSEF entity.

In parallel, a call control instruction generated by the MMTel AS according to its own business logic and based on the call event is also the voice playing instruction Play Voice, and the MMTel AS sends the PlayVoice instruction to the CSEF entity. The voice playing instruction PlayVoice may carry a URL 2 of a resource corresponding to a call waiting tone.

It can be seen that the two call control instructions are call control instructions of a same operation type, both of which carry an operation parameter, that is, a URL of a voice playing audio, and the parameter is unique. In this case, the CSEF entity needs to determine, based on preset priorities of AS services, to execute a call control instruction with a higher priority, and ignore a call control instruction with a lower priority.

S904: The CSEF entity identifies the conflict, and selects one voice playing instruction to execute.

Specifically, the CSEF entity identifies the instruction conflict based on the plurality of received voice playing instructions, and determines, based on the priorities of the AS services, that a priority of the CW service is higher than a priority of the customized ring back tone service. Therefore, the CSEF entity selects one voice playing instruction PlayVoice delivered by the MMTel AS to execute, and ignores the voice playing instruction PlayVoice delivered by the customized ring back tone service AS.

S905: The CSEF entity sends an instruction execution failure response to the customized ring back tone service AS.

The CSEF entity feeds back, to the customized ring back tone service AS, that a reason for the execution failure is the instruction conflict.

S906: The CSEF entity sends an instruction execution success response to the MMTel AS.

Manner 2: The CSEF entity sequentially executes the call control instructions in the mutually exclusive instruction set.

In an implementation, that the CSEF entity sequentially executes the call control instructions in the mutually exclusive instruction set may specifically include: The CSEF entity sequentially executes the call control instructions in the mutually exclusive instruction set in descending order of priorities.

In a specific implementation, before the CSEF entity sequentially executes the call control instructions in the mutually exclusive instruction set in descending order of priorities, the method further includes: The CSEF entity sorts the call control instructions in the mutually exclusive instruction set in descending order of priorities. Then, the CSEF entity may sequentially execute the instructions in a sorted order.

For example, based on global priorities of the AS services, the CSEF entity may sort all the instructions in the mutually exclusive instruction set, to obtain an instruction queue. A call control instruction corresponding to an AS with a highest priority is located at a queue head of the instruction queue, and a call control instruction corresponding to an AS with a lowest priority is located at a queue tail of the instruction queue.

In a specific implementation, after sorting all the instructions in the mutually exclusive instruction set to obtain the instruction queue, the CSEF entity may further check the queue instructions, and move a release-type instruction included in the queue instructions to a tail of the queue. Therefore, the CSEF entity may execute the instruction queue.

In an implementation, that the CSEF entity sequentially executes the call control instructions in the mutually exclusive instruction set in descending order of priorities may specifically include: The CSEF entity may first send first indication information to an AS corresponding to a call control instruction with a non-highest priority in the mutually exclusive instruction set, where the first indication information indicates that the call control instruction delivered by the AS is delayed being executed; and then the CSEF entity executes the call control instruction with the highest priority in the mutually exclusive instruction set, that is, executes the call control instruction at the queue head in the instruction queue obtained after the sorting, and sends an instruction processing success response to the AS corresponding to the call control instruction at the queue head, to indicate that the call control instruction is successfully executed. After the current instruction is executed, the CSEF entity starts to execute a next instruction in the instruction queue, and sends an instruction processing success response to the corresponding AS after the execution succeeds until a last call control instruction is executed.

In an implementation, the first instruction information may further include a delay duration indication, and the delay duration indication indicates possible delay duration of the call control instruction. The delay duration may indicate how long after the CSEF entity executes the call control instruction.

In addition, the foregoing two execution manners of the mutually exclusive instructions may also be used in combination based on a requirement, that is, the CSEF entity may discard some instructions in the mutually exclusive instruction set, and sequentially delay executing reserved some instructions. For a specific execution process, refer to related descriptions in Manner 1 and Manner 2. Details are not described herein again.

In a specific implementation, the call control instruction sent by the AS to the CSEF entity may include a bypass identifier, and the bypass identifier indicates whether the call control instruction is a last call control instruction delivered by the AS. For example, if a bypass identification carried in a call control instruction delivered by an AS indicates False, it indicates that after execution of the call control instruction ends, the CSEF entity may wait for the AS to deliver a next call control instruction and execute the next call control instruction. If a bypass identification carried in a call control instruction indicates True, it indicates that the call control instruction is a last call control instruction delivered by the AS, and the CSEF entity may continue to perform a subsequent operation with no need to wait.

In the foregoing implementation of this application, the CSCF network element, the CSEF network element, or the like provides the service-oriented interface for the AS, for example, the call event API interface and the call control instruction API interface, to implement triggering of the AS services in parallel. In addition, the call control instructions that are mutually exclusive can be quickly identified and processed by using the instruction-level automatic mutually exclusive detection mechanism, thereby improving efficiency of resolving the conflict between the AS services and improving system performance of the IMS network.

In addition, with update and development of communication technologies, the foregoing method for performing the call-related service provided in this application may be further applied to another communication system, for example, a new audio and video architecture, or a lightweight IMS (Lite IMS) system.

Refer to FIG. 10. A communication system is shown. The communication system may include at least a unified control function (Unified Control Function, UCF) network element and a service and application function (Service and Application Function, SAF) network element shown in FIG. 10. The SAF may be configured to perform the steps performed by the AS in the foregoing implementations, and the UCF network element may be configured to perform the steps performed by the CSEF entity in the foregoing implementations, or the CSEF entity may be deployed inside the UCF network element.

Alternatively, as shown in FIG. 10, the communication system may further include an SEF network element. The SEF network element is independently deployed, and is configured to perform the steps performed by the CSEF entity in the foregoing implementations. The SAF network element may be configured to perform the steps performed by the AS in the foregoing implementations. The UCF network element may be configured to perform the steps performed by the S-CSCF network element or the P-CSCF network element in the CSCF network element in the foregoing IMS system.

The foregoing mainly describes, from a perspective of interaction between devices, the solutions provided in embodiments of this application. It may be understood that, to implement the foregoing functions, the call service enabler entity includes a corresponding hardware structure and/or software module for performing the foregoing functions. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the call service enabler entity may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

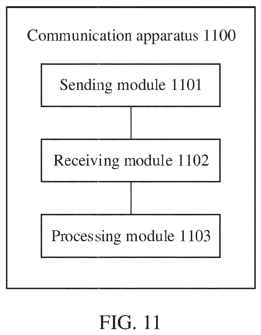

For example, when each function module is obtained through division in an integrated manner, this application further provides a communication apparatus for executing a call-related service. As shown in FIG. 11, the apparatus 1100 includes a sending module 1101, a receiving module 1102, and a processing module 1103. The sending module 1101 and the receiving module 1102 may also be referred to as a transceiver module configured to implement a sending function and/or a receiving function, for example, may be a transceiver circuit, a transceiver, or a communication interface.

The sending module 1101 is configured to send a call event to a plurality of application servers in parallel.

The receiving module 1102 is configured to separately receive call control instructions from the plurality of application servers, to obtain a plurality of call control instructions, where each call control instruction instructs the apparatus 1100 to perform a call-related operation.

The processing module 1103 is configured to determine that the plurality of call control instructions include a mutually exclusive instruction set, where the mutually exclusive instruction set includes at least two call control instructions that are mutually exclusive.

The processing module 1103 is further configured to: select one call control instruction in the mutually exclusive instruction set to execute or sequentially execute the call control instructions in the mutually exclusive instruction set.

In an implementation, the mutually exclusive instruction set includes a first instruction and a second instruction, and the first instruction and the second instruction instruct to perform a same operation at same time based on different operation parameters.

In an implementation, if the first instruction and the second instruction include the same operation and both include a first parameter, and a value of the first parameter in the first instruction is different from a value of the first parameter in the second instruction, the first instruction and the second instruction form the mutually exclusive instruction set, where the first instruction and the second instruction come from different application servers.

In an implementation, the mutually exclusive instruction set includes a third instruction and a fourth instruction, the third instruction and the fourth instruction instruct to perform, at same time, different operations that cannot be simultaneously performed, and the third instruction and the fourth instruction come from different application servers.

In an implementation, the processing module 1103 is specifically configured to execute a call control instruction with a highest priority in the mutually exclusive instruction set.

In an implementation, the sending module 1101 is further configured to: send an instruction processing success response to an application server corresponding to the call control instruction with the highest priority; and send a reason for an instruction processing failure to an application server corresponding to a call control instruction other than the call control instruction with the highest priority in the mutually exclusive instruction set, where the reason for an instruction processing failure is mutual exclusion of instructions.

In an implementation, the processing module 1103 is specifically configured to sequentially execute the call control instructions in the mutually exclusive instruction set in descending order of priorities.

In an implementation, the processing module 1103 is specifically configured to sort the call control instructions in the mutually exclusive instruction set in descending order of priorities.

In an implementation, the sending module 1101 is further configured to send first indication information to an application server corresponding to a call control instruction with a non-highest priority in the mutually exclusive instruction set, where the first indication information indicates that the call control instruction delivered by the application server is delayed being executed.

The processing module 1103 is specifically configured to execute a call control instruction with a highest priority in the mutually exclusive instruction set.

The sending module 1101 is further configured to send an instruction processing success response to a server corresponding to the call control instruction with the highest priority.

In an implementation, the first indication information further includes a delay duration indication.

In an implementation, the receiving module 1102 is further configured to receive user identities and call event subscription information corresponding to users from the plurality of application servers.

In an implementation, the apparatus 1100 is deployed in a call session control function CSCF network element or a unified control function UCF network element.

In an implementation, the processing module 1103 is further configured to generate the call event based on a call session message of a terminal device.

In a simple embodiment, a person skilled in the art can figure out that the communication apparatus 1100 may use the form shown in FIG. 4. For example, the processor 401 in FIG. 4 may invoke the computer-executable instructions stored in the memory 403, to enable the communication apparatus 1100 to perform the method in the foregoing method embodiments.

For example, functions/implementation processes of the sending module 1101 and the receiving module 1102 in FIG. 11 may be implemented by the processor 401 in FIG. 4 by invoking the computer-executable instructions stored in the memory 403. Alternatively, functions/ implementation processes of the processing module 1103 in FIG. 11 may be implemented by the processor 401 in FIG. 4 by invoking the computer-executable instructions stored in the memory 403, and functions/implementation processes of the sending module 1101 and the receiving module 1102 in FIG. 11 may be implemented by the communication interface 404 in FIG. 4.

It should be noted that one or more of the foregoing modules or units may be implemented by software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may be built into a SoC (system-on-a-chip) or an ASIC, or may be an independent semiconductor chip. In addition to cores used to execute software instructions to perform operations or processing, the processor may further include a necessary hardware accelerator, such as a field programmable gate array (field programmable gate array, FPGA), a PLD (programmable logic device), or a logic circuit implementing a dedicated logical operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a chip system. The chip system includes at least one processor and an interface. The at least one processor is coupled to a memory through the interface. When the at least one processor executes a computer program or instructions in the memory, the method according to any one of the foregoing method embodiments is performed. In a possible implementation, the chip system further includes a memory. Optionally, the chip system may include a chip, or may include a chip and another discrete component. This is not specifically limited in embodiments of this application.

Optionally, an embodiment of this application further provides a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be performed. The computer-readable storage medium may be an internal storage unit of the communication apparatus in any one of the foregoing embodiments, for example, a hard disk or memory of the communication apparatus. Alternatively, the computer-readable storage medium may be an external storage device of the communication apparatus, for example, a plug-in hard disk, a smart media card (smart media card, SMC), a secure digital (secure digital, SD) card, or a flash card (flash card) that is configured on the communication apparatus. Further, the computer-readable storage medium may include both the internal storage unit and the external storage device of the communication apparatus. The computer-readable storage medium is configured to store the computer program and other programs and data that are required by the communication apparatus. The computer-readable storage medium may be further configured to temporarily store data that has been output or is to be output.

Optionally, an embodiment of this application further provides a computer program product. All or some of procedures in the foregoing method embodiments may be implemented by a computer program instructing related hardware. The program may be stored in the foregoing computer program product. When the program is executed, the procedures in the foregoing method embodiments may be performed.

Optionally, an embodiment of this application further provides computer instructions. All or some of the procedures in the foregoing method embodiments may be implemented by the computer instructions instructing related hardware (such as a computer, a processor, an access network device, a mobility management network element, or a session management network element). The program may be stored in the computer-readable storage medium or the computer program product.

The foregoing descriptions about implementations allow a person skilled in the art to understand that, for the purpose of convenient and brief description, division into the foregoing functional modules is used as an example for illustration. In an actual application, the foregoing functions may be allocated to different functional modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, the division into modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, may be located in one place, or may be distributed on different places. Some or all of the units may be selected based on actual requirements to achieve the objective of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A method for executing a call-related service, applied to a call service enabler entity, the method comprising:
sending (501) a call event to a plurality of application servers in parallel;
separately receiving (503) call control instructions from the plurality of application servers, to obtain a plurality of call control instructions, wherein each call control instruction instructs the call service enabler entity to perform a call-related operation;
determining (503) that the plurality of call control instructions comprise a mutually exclusive instruction set, wherein the mutually exclusive instruction set comprises at least two call control instructions that are mutually exclusive; and
selecting (504) one call control instruction in the mutually exclusive instruction set to execute;
the method being **characterised by**,
the selecting one call control instruction in the mutually exclusive instruction set to execute specifically comprises:
executing a call control instruction with a highest priority in the mutually exclusive instruction set.

2. The method according to claim 1, wherein the mutually exclusive instruction set comprises a first instruction and a second instruction, and the first instruction and the second instruction instruct to perform a same operation at same time based on different operation parameters.

3. The method according to claim 2, wherein if the first instruction and the second instruction comprise the same operation and both comprise a first parameter, and a value of the first parameter in the first instruction is different from a value of the first parameter in the second instruction, the first instruction and the second instruction form the mutually exclusive instruction set, wherein the first instruction and the second instruction come from different application servers.

4. The method according to claim 1, wherein the mutually exclusive instruction set comprises a third instruction and a fourth instruction, the third instruction and the fourth instruction instruct to perform, at same time, different operations that cannot be simultaneously performed, and the third instruction and the fourth instruction come from different application servers.

5. The method according to any one of claims 1 to 4, wherein the method further comprises:
sending an instruction processing success response to an application server corresponding to the call control instruction with the highest priority; and
sending a reason for an instruction processing failure to an application server corresponding to a call control instruction other than the call control instruction with the highest priority in the mutually exclusive instruction set, wherein the reason for an instruction processing failure is mutual exclusion of instructions.

6. A communication apparatus (1100), wherein the apparatus comprises a processor (1103), and the processor is configured to perform the method according to any one of claims 1 to 5.

7. A computer-readable storage medium, wherein the computer-readable storage medium stores a computer program, and when the computer program is executed by a computer, the computer performs the method according to any one of claims 1 to 5.

8. A computer program product, wherein the computer program product stores instructions, and when the instructions are executed by a computer, the method according to any one of claims 1 to 5 is implemented.

9. A method for executing a call-related service, wherein the method comprises:
sending (501), by a call service enabler entity, a call event to a plurality of application servers in parallel;
receiving (502), by the plurality of application servers, the call event, generating call control instructions based on the call event, and sending the call control instructions to the call service enabler entity, wherein each call control instruction instructs the call service enabler entity to perform a call-related operation;
separately receiving (503), by the call service enabler entity, the call control instructions from the plurality of application servers, to obtain a plurality of call control instructions; and
determining (503), by the call service enabler entity, that the plurality of call control instructions comprise a mutually exclusive instruction set, and selecting (504) one call control instruction in the mutually exclusive instruction set to execute, wherein the mutually exclusive instruction set comprises at least two call control instructions that are mutually exclusive;
the method being **characterised by**
the selecting one call control instruction in the mutually exclusive instruction set to execute specifically comprises:
executing a call control instruction with a highest priority in the mutually exclusive instruction set.

10. The method according to claim 9, wherein the method further comprises:
sending, by the call service enabler entity, an instruction processing success response to an application server corresponding to the call control instruction with the highest priority; and
sending, by the call service enabler entity, a reason for an instruction processing failure to an application server corresponding to a call control instruction other than the call control instruction with the highest priority in the mutually exclusive instruction set, wherein the reason for an instruction processing failure is mutual exclusion of instructions.

11. A communication system, wherein the communication system comprises the call service enabler entity and the plurality of application servers according to any one of claims 1 to 5.

## Patentansprüche

1. Verfahren zum Ausführen eines anrufbezogenen Dienstes, das auf eine Anrufdienstermöglichungsinstanz angewendet wird, wobei das Verfahren umfasst:
paralleles Senden (501) eines Anrufereignisses an eine Vielzahl von Anwendungsservern;
separates Empfangen (503) von Anrufsteuerungsanweisungen von der Vielzahl von Anwendungsservern, um eine Vielzahl von Anrufsteuerungsanweisungen zu erhalten, wobei jede Anrufsteuerungsanweisung die Anrufdienstermöglichungsinstanz anweist, eine anrufbezogene Operation durchzuführen;
Bestimmen (503), dass die Vielzahl von Anrufsteuerungsanweisungen einen sich gegenseitig ausschließenden Anweisungssatz umfasst, wobei der sich gegenseitig ausschließende Anweisungssatz mindestens zwei Anrufsteuerungsanweisungen, die sich gegenseitig ausschließen, umfasst; und
Auswählen (504) einer Anrufsteuerungsanweisung in dem sich gegenseitig ausschließenden Anweisungssatz, um auszuführen;
wobei das Verfahren **gekennzeichnet ist durch,**
das Auswählen einer Aufrufsteuerungsanweisung in dem sich gegenseitig ausschließenden Anweisungssatz, um auszuführen, spezifisch umfasst:
Ausführen einer Anrufsteuerungsanweisung mit einer höchsten Priorität in dem sich gegenseitig ausschließenden Anweisungssatz.

2. Verfahren nach Anspruch 1, wobei der sich gegenseitig ausschließende Anweisungssatz eine erste Anweisung und eine zweite Anweisung umfasst, und die erste Anweisung und die zweite Anweisung anweisen, eine gleiche Operation zu einer gleichen Zeit basierend auf unterschiedlichen Operationsparametern durchzuführen.

3. Verfahren nach Anspruch 2, wobei, falls die erste Anweisung und die zweite Anweisung die gleiche Operation umfassen und beide einen ersten Parameter umfassen, und ein Wert des ersten Parameters in der ersten Anweisung sich von einem Wert des ersten Parameters in der zweiten Anweisung unterscheidet, die erste Anweisung und die zweite Anweisung den sich gegenseitig ausschließenden Anweisungssatz ausbilden, wobei die erste Anweisung und die zweite Anweisung von unterschiedlichen Anwendungsservern stammen.

4. Verfahren nach Anspruch 1, wobei der sich gegenseitig ausschließende Anweisungssatz eine dritte Anweisung und eine vierte Anweisung umfasst, die dritte Anweisung und die vierte Anweisung anweisen, zu der gleichen Zeit, unterschiedliche Operationen, die nicht gleichzeitig durchgeführt werden können, durchzuführen, und die dritte Anweisung und die vierte Anweisung von unterschiedlichen Anwendungsservern stammen.

5. Verfahren nach einem der Ansprüche 1 bis 4, wobei das Verfahren ferner umfasst:
Senden einer Anweisungsverarbeitungserfolgsantwort an einen Anwendungsserver, der der Anrufsteuerungsanweisung mit der höchsten Priorität entspricht; und
Senden eines Grunds für einen Anweisungsverarbeitungsfehler an einen Anwendungsserver, der einer Anrufsteuerungsanweisung entspricht, die nicht die Anrufsteuerungsanweisung mit der höchsten Priorität in dem sich gegenseitig ausschließenden Anweisungssatz ist, wobei der Grund für einen Anweisungsverarbeitungsfehler ein gegenseitiger Ausschluss von Anweisungen ist.

6. Kommunikationseinrichtung (1100), wobei die Einrichtung einen Prozessor (1103) umfasst, und der Prozessor konfiguriert ist, um das Verfahren nach einem der Ansprüche 1 bis 5 durchzuführen.

7. Computerlesbares Speichermedium, wobei das computerlesbare Speichermedium ein Computerprogramm speichert, und wenn das Computerprogramm durch einen Computer ausgeführt wird, der Computer das Verfahren nach einem der Ansprüche 1 bis 5 durchführt.

8. Computerprogrammprodukt, wobei das Computerprogrammprodukt Anweisungen speichert, und wenn die Anweisungen durch einen Computer ausgeführt werden, das Verfahren nach einem der Ansprüche 1 bis 5 implementiert wird.

9. Verfahren zum Ausführen eines anrufbezogenen Dienstes, wobei das Verfahren umfasst:
paralleles Senden (501), durch eine Anrufdienstermöglichungsinstanz, eines Anrufereignisses an eine Vielzahl von Anwendungsservern;
Empfangen (502), durch die Vielzahl von Anwendungsservern, des Anrufereignisses, Erzeugen von Anrufsteuerungsanweisungen basierend auf dem Anrufereignis und Senden der Anrufsteuerungsanweisungen an die Anrufdienstermöglichungsinstanz, wobei jede Anrufsteuerungsanweisung die Anrufdienstermöglichungsinstanz anweist, eine anrufbezogene Operation durchzuführen;
separates Empfangen (503), durch die Anrufdienstermöglichungsinstanz, der Anrufsteuerungsanweisungen von der Vielzahl von Anwendungsservern, um eine Vielzahl von Anrufsteuerungsanweisungen zu erhalten; und
Bestimmen (503), durch die Anrufdienstermöglichungsinstanz, dass die Vielzahl von Anrufsteuerungsanweisungen einen sich gegenseitig ausschließenden Anweisungssatz umfasst, und Auswählen (504) einer Anrufsteuerungsanweisung in dem sich gegenseitig ausschließenden Anweisungssatz, um auszuführen, wobei der sich gegenseitig ausschließende Anweisungssatz mindestens zwei Anrufsteuerungsanweisungen, die sich gegenseitig ausschließen, umfasst;
wobei das Verfahren **gekennzeichnet ist durch**
das Auswählen einer Aufrufsteuerungsanweisung in dem sich gegenseitig ausschließenden Anweisungssatz, um auszuführen, spezifisch umfasst:
Ausführen einer Anrufsteuerungsanweisung mit einer höchsten Priorität in dem sich gegenseitig ausschließenden Anweisungssatz.

10. Verfahren nach Anspruch 9, wobei das Verfahren ferner umfasst:
Senden, durch die Anrufdienstermöglichungsinstanz, einer Anweisungsverarbeitungserfolgsantwort an einen Anwendungsserver, der der Anrufsteuerungsanweisung mit der höchsten Priorität entspricht; und
Senden, durch die Anrufdienstermöglichungsinstanz, eines Grunds für einen Anweisungsverarbeitungsfehler an einen Anwendungsserver, der einer Anrufsteuerungsanweisung entspricht, die nicht die Anrufsteuerungsanweisung mit der höchsten Priorität in dem sich gegenseitig ausschließenden Anweisungssatz ist,
wobei der Grund für einen Anweisungsverarbeitungsfehler der gegenseitige Ausschluss von Anweisungen ist.

11. Kommunikationssystem, wobei das Kommunikationssystem die Anrufdienstermöglichungsinstanz und die Vielzahl von Anwendungsservern nach einem der Ansprüche 1 bis 5 umfasst.

## Revendications

1. Procédé d'exécution d'un service lié à l'appel, appliqué à une entité d'activation de service d'appel, le procédé comprenant :
l'envoi (501) d'un événement d'appel à une pluralité de serveurs d'application en parallèle ;
la réception (503) séparée d'instructions de commande d'appel provenant de la pluralité de serveurs d'application, pour obtenir une pluralité d'instructions de commande d'appel,
dans lequel chaque instruction de commande d'appel donne l'instruction à l'entité d'activation de service d'appel d'effectuer une opération liée à l'appel ;
la détermination (503) du fait que la pluralité d'instructions de commande d'appel comprend un ensemble d'instructions mutuellement exclusives, dans lequel l'ensemble d'instructions mutuellement exclusives comprend au moins deux instructions de commande d'appel qui sont mutuellement exclusives ; et
la sélection (504) d'une instruction de commande d'appel dans l'ensemble d'instructions mutuellement exclusives à exécuter ;
le procédé étant **caractérisé par,**
la sélection d'une instruction de commande d'appel dans l'ensemble d'instructions mutuellement exclusives à exécuter comprend spécifiquement :
l'exécution d'une instruction de commande d'appel ayant une priorité la plus élevée dans l'ensemble d'instructions mutuellement exclusives.

2. Procédé selon la revendication 1, dans lequel l'ensemble d'instructions mutuellement exclusives comprend une première instruction et une deuxième instruction, et la première instruction et la deuxième instruction donnent l'instruction d'effectuer une même opération au même moment sur la base de paramètres d'opération différents.

3. Procédé selon la revendication 2, dans lequel, si la première instruction et la deuxième instruction comprennent la même opération et comprennent toutes deux un premier paramètre, et qu'une valeur du premier paramètre dans la première instruction est différente d'une valeur du premier paramètre dans la deuxième instruction, la première instruction et la deuxième instruction forment l'ensemble d'instructions mutuellement exclusives, dans lequel la première instruction et la deuxième instruction proviennent de serveurs d'application différents.

4. Procédé selon la revendication 1, dans lequel l'ensemble d'instructions mutuellement exclusives comprend une troisième instruction et une quatrième instruction, la troisième instruction et la quatrième instruction donnent l'instruction d'effectuer, en même temps, différentes opérations qui ne peuvent pas être effectuées simultanément, et la troisième instruction et la quatrième instruction proviennent de serveurs d'application différents.

5. Procédé selon l'une quelconque des revendications 1 à 4, dans lequel le procédé comprend en outre :
l'envoi d'une réponse de réussite de traitement d'instruction à un serveur d'application correspondant à l'instruction de commande d'appel ayant la priorité la plus élevée ; et
l'envoi d'une raison d'un échec de traitement d'instruction à un serveur d'application correspondant à une instruction de commande d'appel autre que l'instruction de commande d'appel ayant la priorité la plus élevée dans l'ensemble d'instructions mutuellement exclusives, dans lequel la raison d'un échec de traitement d'instruction est l'exclusion mutuelle d'instructions.

6. Appareil de communication (1100), dans lequel l'appareil comprend un processeur (1103) et le processeur est configuré pour effectuer le procédé selon l'une quelconque des revendications 1 à 5.

7. Support de stockage lisible par ordinateur, dans lequel le support de stockage lisible par ordinateur stocke un programme informatique, et lorsque le programme informatique est exécuté par un ordinateur, l'ordinateur effectue le procédé selon l'une quelconque des revendications 1 à 5.

8. Produit-programme d'ordinateur, dans lequel le produit-programme d'ordinateur stocke des instructions, et lorsque les instructions sont exécutées par un ordinateur, le procédé selon l'une quelconque des revendications 1 à 5 est mis en œuvre.

9. Procédé destiné à exécuter un service lié à l'appel, dans lequel le procédé comprend :
l'envoi (501), par une entité d'activation de service d'appel, d'un événement d'appel à une pluralité de serveurs d'application en parallèle ;
la réception (502), par la pluralité de serveurs d'application, de l'événement d'appel, la génération d'instructions de commande d'appel sur la base de l'événement d'appel, et l'envoi des instructions de commande d'appel à l'entité d'activation de service d'appel, dans lequel chaque instruction de commande d'appel donne l'instruction à l'entité d'activation de service d'appel d'effectuer une opération liée à l'appel ;
la réception (503) séparée, par l'entité d'activation de service d'appel, des instructions de commande d'appel provenant de la pluralité de serveurs d'application, afin d'obtenir une pluralité d'instructions de commande d'appel ; et
la détermination (503), par l'entité d'activation de service d'appel, du fait que la pluralité d'instructions de commande d'appel comprend un ensemble d'instructions mutuellement exclusives, et la sélection (504) d'une instruction de commande d'appel dans l'ensemble d'instructions mutuellement exclusives à exécuter, dans lequel l'ensemble d'instructions mutuellement exclusives comprend au moins deux instructions de commande d'appel qui sont mutuellement exclusives ;
le procédé étant **caractérisé par**
la sélection d'une instruction de commande d'appel dans l'ensemble d'instructions mutuellement exclusives à exécuter comprend spécifiquement :
l'exécution d'une instruction de commande d'appel ayant une priorité la plus élevée dans l'ensemble d'instructions mutuellement exclusives.

10. Procédé selon la revendication 9, dans lequel le procédé comprend en outre :
l'envoi, par l'entité d'activation de service d'appel, d'une réponse de réussite de traitement d'instruction à un serveur d'application correspondant à l'instruction de commande d'appel ayant la priorité la plus élevée ; et
l'envoi, par l'entité d'activation de service d'appel, d'une raison d'un échec de traitement d'instruction à un serveur d'application correspondant à une instruction de commande d'appel autre que l'instruction de commande d'appel ayant la priorité la plus élevée dans l'ensemble d'instructions mutuellement exclusives, dans lequel la raison d'un échec de traitement d'instruction est l'exclusion mutuelle d'instructions.

11. Système de communication, dans lequel le système de communication comprend l'entité d'activation de service d'appel et la pluralité de serveurs d'application selon l'une quelconque des revendications 1 à 5.
